# EUROPEAN PATENT APPLICATION

(11) **EP 4 008 460 A1**
(43) Date of publication of application: **08.06.2022**
(21) Application number: 21195774.1
(22) Date of filing: 09.09.2021
(51) Int. Cl.: B23B 31/117, B23B 31/02

(54) **PRECISION THERMAL MODULAR TOOLHOLDER**

(30) Priority: 04.12.2020 ES 202032635
(71) Applicant: LAIP, S.A., 48220 Abadiano (ES)
(72) Inventor: Lamarain Ibaibarriaga, Iñaki, 48220 Abadiano (ES)
(74) Representative: Izquierdo Blanco, Maria Alicia

(57) **Abstract**

A precision thermal modular toolholder 1 that it is made up of a base 2 and an insertable tip 3, the base consisting of an insertion end 2a and a mooring end 2b which has a threaded cavity 2c inside and a conical cavity 2d that has two rectified annular projections 2e and whose front 2f is rectified; and the insertable tip consisting of an insertion end 3a, which has a threaded stud 3c corresponding to the threaded cavity of the base, a rectified conical section 3d corresponding to the conical cavity of the mooring end of the base and a conical front 3e corresponding to the conical front of the base and a mooring end 3b having a receptor cavity 3f for a cutting tool 4.

## Description

### Field of the invention

This invention concerns a precision thermal modular toolholder. More specifically, it refers to a precision thermal modular toolholder for general use in the field of machine tools of the type with a modular insertable base and tip, allowing said base to be a lanyard for the tip and the latter to be a clamping element for the cutting tool.

It is also a thermal toolholder that is heated by means of a heating station for the housing of the cutting tool in the receptor cavity of the tip cap in order to achieve the expansion of the tip cavity and so insert the cutting tool, remaining tied to the insertable tip cap by means of the thermal contraction of the same produced during the cooling thereof. Toolholders are cutting tool clamping devices generally used in machining centers during machining processes. These must be sufficiently rigid to withstand cutting forces and continuous rotation of the toolholder and cutting tool assembly without suffering vibrations during machining that could cause deviations in the coaxiality or jumps in the tip of the cutting tool, since this would mean a decrease in precision during machining, damaging the finish of the final product. On the other hand, toolholders must have good accessibility, versatility and simple maintenance, to reduce tool change and maintenance times.

For this reason, it is essential to have a versatile, insertable tip clamping toolholder that guarantees the limitation of relative movement between the base and the insertable tip and avoiding radial oscillations of the cutting tool during movement in the machining process.

### Prior state of the art

In the current state of the art, unitary toolholders are mostly known, that is to say, starting the set comprising the base and tip is obtained from the same material billet. This is a disadvantage, since the tips of the thermal toolholders are heated to around 350ºC to promote the expansion of the receptor cavity of the tip and thus to be able to insert the cutting tool. Due to this heating, after approximately 2000-3000 cycles of use of the toolholder, the tip begins to deteriorate and must be replaced. For this reason, if the toolholder is not modular and it is therefore impossible to realize a single replacement of the tip, the entire toolholder must be replaced, including the base. This implies an increase in manufacturing costs since a larger stock of material must be used than if only the tip could be replaced, in addition to an increase in material waste generated as an increase in the negative impact on the environment. The present invention, being a modular toolholder, has the possibility that, in case of deterioration of the tipo, only said element would have to be replaced and, consequently, a reduction of the stock of material used is achieved and a reduction in manufacturing costs and generated waste. In addition, as the toolholder is modular, it allows different geometries and dimensions of tips to be inserted and, consequently, of cutting tools according to the needs of the machining process, and with this, high versatility is achieved.

Although, there are some toolholders intended to house the tip. This is connected and restricted to the base by means of a guide cavity and a threaded cavity and thus a high radial oscillation or jump in the tip of the tool during the machining process is avoided.

With this configuration, there are toolholders whose limitation of the radial movement and vibration of the tip is carried out by means of cavities in the part furthest from the mooring end of the base, generating jumps of the cutting tool tip of not less than a few µm. This is a clear disadvantage with respect to the present invention, since in said cavities, an accumulation of residues can occur over time after the continued use of refrigerant fluids, such as coolants, which results in an increase in maintenance stops during the production process, raising manufacturing costs. On the contrary, in the present invention, the limitation of movement of the insertable tip is achieved by means of a threaded cavity, and a rectified tapered cavity at the base, including rectified annular projections and their support on the tip and the support of the conical front of the base with the conical front of the insertable tip, reducing the use of cavities. On the other hand, this invention places the limitation area of the radial oscillation or tip jump of the cutting tool at the mooring end of the base, which is a clear advantage with respect to the known technique, since, the less distance between the area of limitation of the insertable tip and the clamping area thereof at the base of the toolholder, the greater the limitation of oscillation movement of the insertable tip and consequently less jump of the tip of the cutting tool, managing to reduce cutting tool tip jumps down to 4 µm, obtaining greater precision and surface finish during the machining process.

Furthermore, in other inventions the use of a rib in the receptor cavity of the insertable tip for correct angular alignment of the cutting tool is known. This type of configuration, having only one limiting and guiding element, is of little benefit in limiting a possible relative movement between the cutting tool and the receiving element (insertable tip). On the contrary, the present invention, as mentioned previously, consists of several movement limitation elements, the threaded cavity where the threaded stud of the insertable tip is housed, and three support points; two rectified annular projections supported on the rectified conical section of the insertable tip, and the support between the conical front of the base with the conical front of the insertable tip, all of which improve the limitation of movement of the insertable tip by reducing the tip jump of the cutting tool.

### Explanation of the invention and advantages

In contrast to the state of the art described above, the present invention has as its object a precision thermal modular toolholder that is made up of a base and an insertable tip, the base consisting of an insertion end and a tie end that has a threaded cavity inside and a conical cavity that has two rectified annular projections and whose front is rectified; and the tip consisting of an insertion end, which has a threaded stud corresponding to the threaded cavity of the base, a rectified conical section corresponding to the conical cavity of the clamp end of the base and a rectified face corresponding to the rectified face of the base and a clamp end having a cutting tool receiving pocket.

Thanks to this configuration, the precision thermal modular toolholder of the invention allows the necessary replacement of the insertable tip due to the deterioration produced by the heating (350ºC) thereof from 2000-3000 cycles of use. This represents a saving (approximately 50%) in the use of starting material billet in the manufacture of the present invention, since, only a single material billet has to be used for the manufacture of the insertable tip. Consequently, this results in savings in manufacturing and production costs of the final products, in addition to a reduction in starting material waste and a resulting decrease in the negative impact on the environment. Another characteristic advantage of the modularity of this invention is to provide the toolholder with versatility, since, depending on the characteristics of the machining process or the geometries of the products to be manufactured, the insert can be exchanged for another that better adapts to different situations raised above and consequently different cutting tools can be accommodated in the different tips. Moreover, as the tip is insertable, cleaning tasks are facilitated by reducing maintenance times because different internal elements of the thermal modular toolholder can be accessed more easily than if the toolholder were unitary, that is, if the same material billet had been used for the base and the tip, the joint between the base and the tip being permanent.

Another advantageous aspect of the present invention is that the two rectified annular projections are contiguous in the conical cavity of the base. Due to this configuration, the present invention is endowed, on the one hand, with better precision in the mooring of the insertable tip to the base and, therefore, better precision during machining operations, achieving smaller and imperceptible tip jumps of the cutting tool in normal use and that are up to 4 µm. As the conical cavity is arranged next to the threaded cavity, which is the zone of limitation of radial oscillation during the machining processes, the distance between these elements is less than if both elements were separated and therefore a reduction in the cutting tool jump tip is achieved. On the other hand, thanks to the fact that the rectified annular projections are located in the conical cavity arranged at the mooring end of the base, the accumulation of waste during the time of use of the precision thermal modular toolholder, such as, for example, coolants or cutting fluids, in an area of easy access for cleaning by the user, since, as mentioned above, the present invention is modular and therefore the insertable tip can be removed, and cleaning tasks are facilitated by reducing maintenance times.

Lastly, an additional advantage of this invention is that the insertable tip is capable of being housed in the mooring end of the base, its threaded stud being inserted into the threaded cavity of the base and its rectified conical section in the conical cavity of the base, and the two rectified annular projections of the base in contact with the rectified conical section of the insertable tip and the conical front of the insertable tip with the conical front of the base. With this clamping configuration between the insertable tip and the base, three support points are achieved in addition to the usual clamping by threading the threaded stud of the insertable tip and the threaded cavity; two supports due to the contact of the rectified annular projections with the rectified conical section of the insertable tip and a third support as a result of the contact of the conical front of the insertable tip with the conical front of the base, in addition to an area of limitation of the radial movement of the insertable tip as a result of the insertion of the threaded stud of the tip into the threaded cavity of the base.

The radial oscillation limitation zone together with the three supports achieves a reduction in the tip jump of the cutting tool that is generated due to the rotary movement of the precision thermal modular toolholder and vibrations that occur during machining operations. As a result, it is possible to reduce these cutting tool tip jumps down to 4 µm, obtaining greater precision and finishes during machining processes.

Therefore, with the aforementioned, the precision thermal modular toolholder of the present invention guarantees; the limitation of relative movement between the base and the insertable tip reducing the jumps in the cutting tool down to 4 µm avoiding radial oscillations during the rotary movement in machining work.

### Drawings and references

In order to better understand the nature of the invention, an arrangement is presented in the attached drawings which is merely illustrative and not limiting.

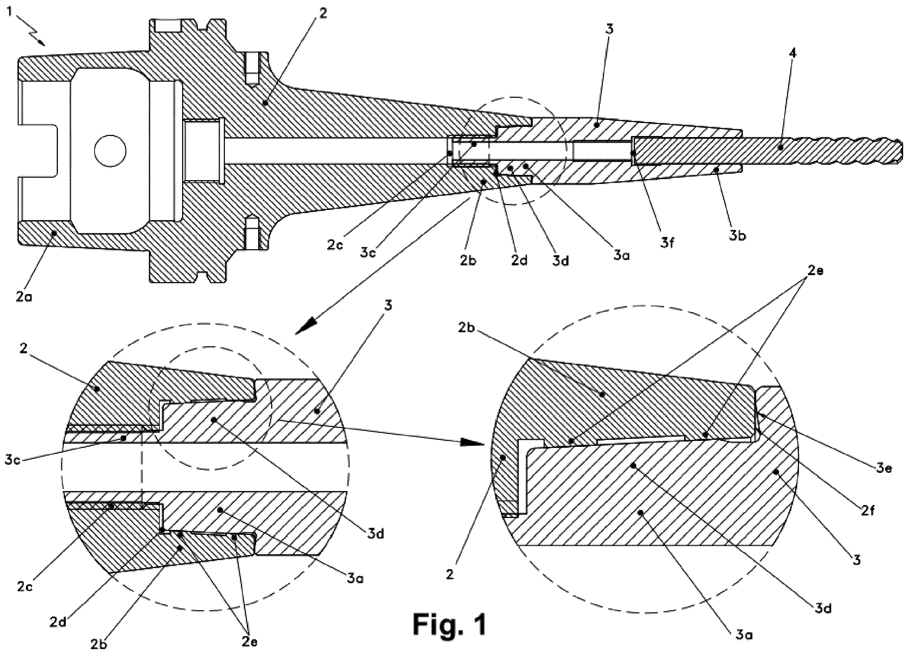

Figure 1 shows a longitudinal section view of the precision thermal modular toolholder (1) with the insertable tip (3) housed by the insertion end (3a) of the insertable tip (3) in the mooring end (2b) of the base (2), the threaded stud (3c) of the insertable tip (3) being inserted into the threaded cavity (2c) of the base (2) and the rectified conical section (3d) of the insertable tip (3) in the conical cavity (2d) of the base (2). On the other hand, note that the cutting tool (4) is housed in the receptor cavity (3f) of the mooring end (3b) of the insertable tip (3). Furthermore, an enlarged detail view is presented showing the insertion of the insertion end (3a) of the insertable tip (3) into the mooring end (2b) of the base (2) by means of the insertion of the threaded stud (3c) of the insertable tip (3) in the threaded cavity (2c) of the base (2), the rectified conical section (3d) being inserted into the conical cavity (2d) of the base (2) and in contact with the rectified annular projections (2e) of the mooring end (2b) of the base (2) with the rectified conical section (3d) of the insertion end (3a) of the insertable tip (3). Lastly, another enlarged detail view is shown with three support points of the precision thermal modular toolholder (1) with the two rectified annular projections (2e) of the mooring end (2b) of the base (2) in contact with the rectified conical section (3d) of the insertion end (3a), and the rectified front (3e) of the insertable tip (3) with the rectified front (2f) of the base (2).

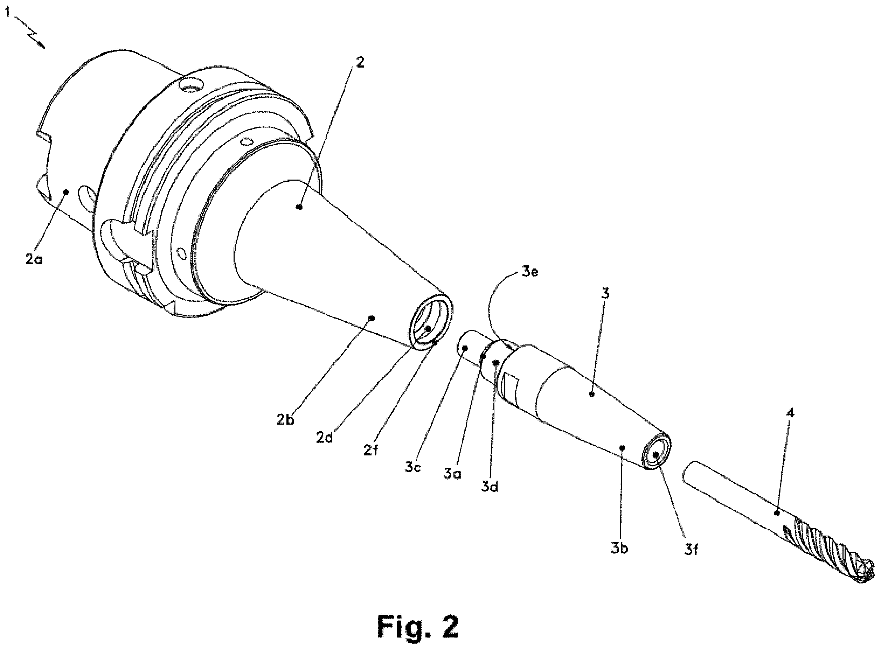

Figure 2 shows an exploded view of the precision thermal modular toolholder (1) in which can be observed; the insertion end (2a) of the base (2) and the mooring end (2b) of the base (2) through which the insertable tip (3) will be inserted threaded through its insertion end (3a) constituted by the threaded stud (3c) and the rectified conical section (3d) that will be housed in the conical cavity (2d) of the base (2). In addition, the rectified face (2f) of the base (2) and the rectified face (3e) of the insertable tip (3) are shown. Moreover, the cutting tool (4) is shown that will be inserted through the receptor cavity (3f) of the mooring end (3b) of the insertable tip (3).

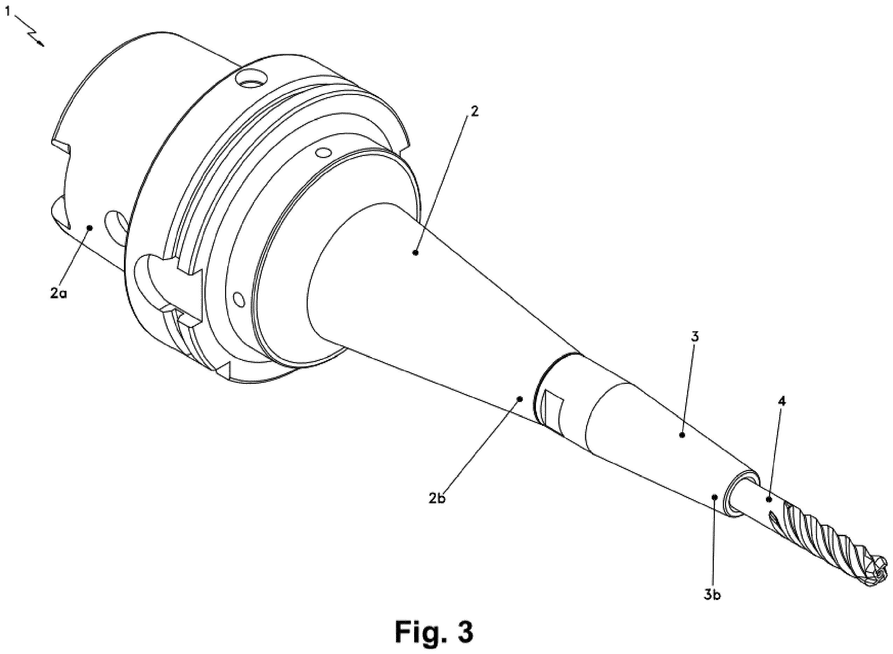

Figure 3 shows a perspective view of the precision thermal modular toolholder (1) in which can be observed; the insertion end (2a) of the base (2) and the mooring end (2b) of the base (2) in which the insertable tip (3) is inserted. On the other hand, the cutting tool (4) housed through the mooring end (3b) of the insertable tip (3) is shown.

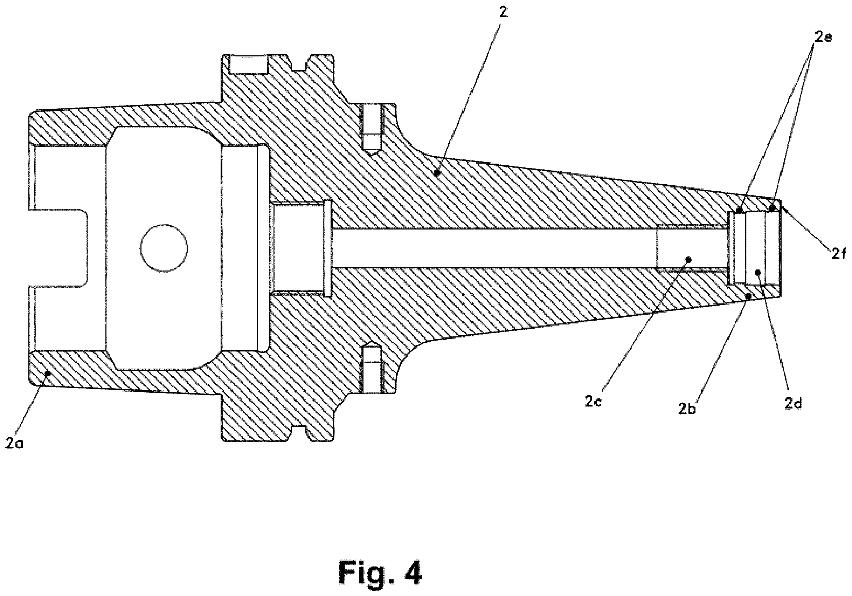

Figure 4 shows a longitudinal section view of the base (2) with the insertion end (2a) and the mooring end (2b) in which the threaded cavity (2c) adjacent to the conical cavity (2d) with its two rectified annular projections (2e) and the rectified front (2f) are located. The figure shows a longitudinal section view of the insertable tip (3) with the insertion end (3a) in which are located; the threaded stud (3c) adjacent to the rectified conical section (3d) and the rectified front (3e), and the mooring end (3b) in which the receptor cavity (3f) is located.

The following references are indicated in these figures:
1. Precision thermal modular toolholder
2. Base
   2a. Base insertion end
   2b. Base mooring end
   2c. Threaded cavity
   2d. Conical cavity
   2e. Rectified annular projections
   2f. Rectified face of the base
3. Insertable tip
   3a. Insertion end of the insertable tip
   3b. Mooring end of the insertable tip
   3c. Threaded stud
   3d. Rectified conical section
   3e. Rectified front of the insertable tip
   3f. Receptor cavity
4. Cutting tool

### Presentation of a preferred embodiment

In relation to the above-listed drawings and references, a preferred mode of execution of the object of the invention is illustrated in the attached drawings, referring to a precision thermal modular toolholder (1) that is made up of a base (2) and an insertable tip (3), the base (2) consisting of an insertion end (2a) and a mooring end (2b) that has inside a threaded cavity (2c) and a conical cavity (2d) that has two rectified annular projections (2e) and whose front (2f) is rectified; and the insertable tip (3) comprising an insertion end (3a) which has a threaded stud (3c) corresponding to the threaded cavity (2c) of the base (2), a rectified conical section (3d) corresponding to the conical cavity (2d) of the mooring end (2b) of the base (2) and a conical front (3e) corresponding to the conical front (2f) of the base (2) and a mooring end (3b) having a receptor cavity (3f) for the cutting tool (4).

As can be seen in figure 1, the insertable tip (3) can be removed by unscrewing the threaded stud (3c) from the insertion end (3a) of the tip (3), from the threaded cavity (2d) of the clamping end (2b) of the base (2) and decoupling the rectified conical section (3d), from the insertion end (3a) of the tip (3), from the conical cavity (2d) of the mooring end (2b) of the base (2), allowing it to be replaced by a new one, if necessary, since, after 2000-3000 cycles of use, wear or damage occurs due to heating of the insertable tip (3) to about 350ºC for the insertion of the cutting tool (4) in the receptor cavity (3f) located at the mooring end (2b) of the insertable tip (3). The modularity characteristic of the present invention's precision thermal modular toolholder (1), which can also be observed in figure 2, represents a saving (approximately 50%) in the use of material in the manufacture of the present invention. In the replacement of the insertable tip (3) with a new one, it will only be necessary to use a billet of starting material for the manufacture of a new insertable tip (3). As a consequence of this, there is a saving in the costs of manufacturing and production of the final products, in addition to a reduction in waste of starting material and with it a decrease in the negative impact on the environment. Another advantageous aspect of the present invention is that, depending on the characteristics of the machining process or the geometries of the products to be manufactured, the insertable tip (3) can be exchanged for another that better adapts to the different situations mentioned above and, as a consequence, different cutting tools can be housed in the different insertable tips (3) through the receptor cavity (3f), achieving great versatility. On the other hand, cleaning tasks are facilitated by reducing maintenance times due to the fact that the different internal elements of the precision thermal modular toolholder (1), such as the threaded cavity (2c) and the conical cavity (2d) of the base (2), can be accessed more easily than if the toolholder were unitary. This is due to the fact that the insertable tip (3) is removable.

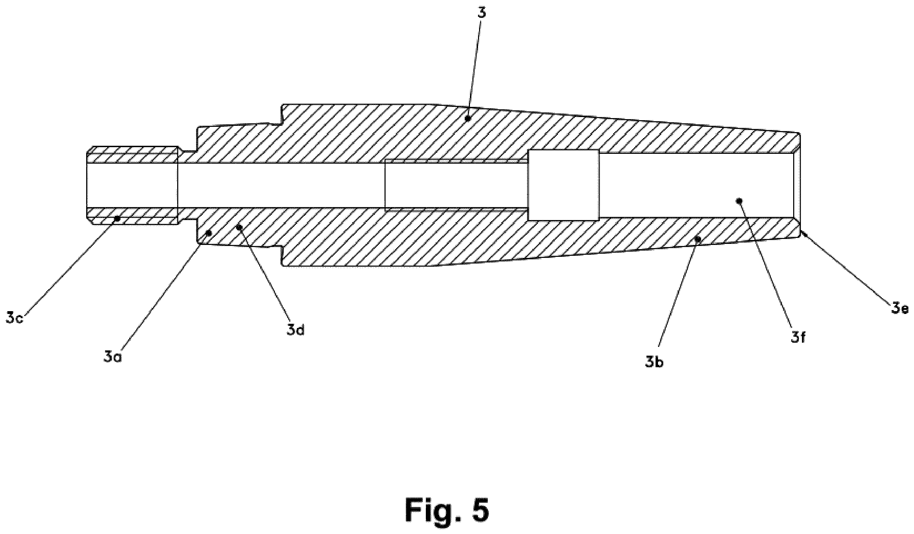

As can be seen in figure 4, the configuration of the present invention is provided, on the one hand, with; better precision in the attachment of the insertable tip (3), shown in figure 5, to the base (2) and, therefore, better precision during machining operations, achieving jumps in the tip of the cutting tool (4), shown in figure 3, up to 4 µm, all due to the fact that the two rectified annular projections (2e) are contiguous in the conical cavity (2d) of the base (2), making the distance between the threaded cavity (2c), which is the limitation area of radial oscillation during machining processes, and the conical cavity (2d) of the base (2), smaller than if both were separated, and therefore a reduction in the tip jump of the cutting tool (4) is achieved. On the other hand, the possible waste accumulated during the time of use of the precision thermal modular toolholder (1), such as coolants or cutting fluids, is located in an area of easy access for cleaning by the user, since the rectified annular projections (2e) are found in the conical cavity (2d) arranged at the mooring end (2b) of the base (2) and also thanks to the fact that, as mentioned above, the present invention is modular and, therefore, by dismounting insertable tip cap (3), shown in figure 5, by unscrewing it from the base (2), cleaning tasks are facilitated by reducing maintenance times

Lastly, with the mooring configuration between the insertable tip (3) and the base (2), shown in figure 1, three support points are achieved; two supports due to the contact of the rectified annular projections (2e) with the rectified conical section (3d) of the insertable tip (3) and a third support as a result of the contact of the rectified face (3e) of the insertable tip (3) with the rectified front (2f) of the base (2), in addition to the usual fastening by threading the threaded stud (3c) of the insertable tip (3) and the threaded cavity (2c) of the base (2), which is the area of limitation of radial movement. With the zone of limitation of radial oscillation together with the three supports, a reduction in the tip jump of the cutting tool (4) is achieved, which is generated due to the rotary movement of the precision thermal modular toolholder (1) and vibrations that occur during machining operations. Reducing these cutting tool tip jumps down to 4 µm provides the present invention with greater precision and finishes during machining processes. This additional advantage is achieved thanks to the fact that the insertable tip (3) is capable of being lodged in the mooring end (2b) of the base (2) by means of its threading, its threaded stud (3c) being inserted into the threaded cavity (2c) of the base (2) and its rectified conical section (3d) in the conical cavity (2d) of the base (2), and the two rectified annular projections (2e) of the base (2) in contact with the rectified conical section (3d) of the insertable tip (3) and the rectified front (3e) of the insertable tip (3) with the rectified front (2f) of the base (2).

Variations in materials, shape, size and arrangement of the component elements, described in a non-limiting manner, do not alter the essentiality of this invention, this being sufficient to proceed to its reproduction by an expert.

## Claims

1. A precision thermal modular toolholder (1) **characterized in that** it is made up of a base (2) and an insertable tip (3), the base (2) consisting of an insertion end (2a) and a mooring end (2b) which has a threaded cavity (2c) inside and a conical cavity (2d) that has two rectified annular projections (2e) and whose front (2f) is rectified; and the insertable tip (3) consisting of an insertion end (3a), which has a threaded stud (3c) corresponding to the threaded cavity (2c) of the base (2), a rectified conical section (3d) corresponding to the conical cavity (2d) of the mooring end (2b) of the base (2) and a conical front (3e) corresponding to the conical front (2f) of the base (2) and a mooring end (3b) having a receptor cavity (3f) of the cutting tool (4).

2. A precision thermal modular toolholder (1), according to claim 1, **characterized in that** the two rectified annular projections (2e) are contiguous in the conical cavity (2d) of the base (2).

3. Precision thermal modular toolholder (1), according to all the previous claims, **characterized in that** the insertable tip (3) is capable of being housed in the mooring end (2b) of the base (2), its threaded stud being inserted (3c) in the threaded cavity (2c) of the base (2) and its rectified conical section (3d) in the conical cavity (2d) of the base (2), and the two rectified annular projections (2e) of the base (2) in contact with the rectified conical section (3d) of the insertable tip (3) and the rectified front (3e) of the insertable tip (3) with the rectified front (2f) of the base (2).
